Europäisches Patentamt

European Patent Office

Office européen des brevets

(19)

(11) Publication number: **0 247 800 B1**

# EUROPEAN PATENT SPECIFICATION

(12)

(45) Date of publication of patent specification: **05.01.94**  (51) Int. Cl.5: **G01N 35/08**

(21) Application number: **87304538.9**

(22) Date of filing: **21.05.87**

(54) **Analyzing apparatus and method for analysis of liquid samples.**

(30) Priority: **21.05.86 US 865889**

(43) Date of publication of application:
**02.12.87 Bulletin  87/49**

(45) Publication of the grant of the patent:
**05.01.94 Bulletin  94/01**

(84) Designated Contracting States:
**AT BE CH DE ES FR GB IT LI NL SE**

(56) References cited:
EP-A- 0 180 063         EP-A- 0 229 599
JP-A- 6 182 169         US-A- 4 055 752
US-A- 4 314 824         US-A- 4 557 601

**PROCEEDINGS OF THE ROYAL SOCIETY, series A, vol. 219, 1953, pages 186-203, London, GB; G.I. TAYLOR: "Dispersion of soluble matter in solvent flowing slowly through a tube"**

(73) Proprietor: **HERCULES INCORPORATED
Hercules Plaza
Wilmington Delaware 19894(US)**

(72) Inventor: **Parrent, George B., Jr.
35 Dalton Road
Chelmsford, MA 01824(US)**
Inventor: **Gubisch, Roland W.
627 Massachusetts Ave.
Lexington Massachusetts 02173(US)**
Inventor: **Hauer, Harold
103 Hickory Spring Road
Wilmington, DE 19807(US)**
Inventor: **Davidson, David L.
14 Granville Lane
Newark, DE 19713(US)**

(74) Representative: **Cross, Rupert Edward Blount et al
BOULT, WADE & TENNANT
27 Furnival Street
London EC4A 1PO (GB)**

EP 0 247 800 B1

## Description

The present invention relates to an automatic analysis apparatus for rapid analysis of liquid samples, or more particularly to an apparatus and method for performing analysis of multiple samples in which the multiple samples are selectively introduced into an analysis path and rapidly and precisely individually analyzed. Still more particularly, this invention relates to a programmable analysis of individual samples in an integral stream of liquid.

Analysis by flow injection analysis (FIA) provides that a liquid sample of small volume is injected into a carrier stream so that the injected sample forms a zone. This zone of the sample disperses in the carrier and is subject to examination in a detector. Typically in a system of this type the sample reacts with the carrier forming a product which is sensed in a detector and the sensed data recorded. The recorded information takes the form of a peak curve registered on a suitable recording device. Typically the shape of the recorded curve is an unsymmetrical peak, with height and width defined by a leading edge, a peak and a following edge. The leading and following edges of the interface between the sample zone and the carrier define the shape of the curve for a given sample. In this previously analytical technique only the height or width of these curves are used to judge the concentrations of successively detected and observed samples. Thus, very little of the available information is used.

The success of the FIA technique depends upon the controlled dispersion of the sample and/or reagent in the carrier stream to influence the rates of chemical reactions and to adjust the concentrations of reacting species to optimize detector response. The dispersion is a function of the ratio of the size of the injected aliquot to the volume of the reaction zone, the geometry of the flow path, the velocity of the carrier stream, and the molecular diffusivity of the species in question. As the geometry of the flow path and the velocity of the carrier stream are dictated by commercially available pump and tubing sizes, practitioners of flow injection analysis use the sample/reagent aliquot size to adjust the observed dispersion to the desired detector response (curve shape).

An automated sampling system in which samples are drawn into the system using a vacuum pump through a sample selector valve was disclosed by Hanson et al U.S. 4,108,602. The samples are drawn from the selector valve through a flow cell of a chemical analyzer. Flow is then allowed to continue past the flow cell to an overflow section where liquid flow is blocked by a microporous filter to protect the source of partial vacuum. After analysis, the sample is returned through the same selector valve by switching from a vacuum system to a pumping system. First and second flow paths within the analyzer system are provided which can be used for measuring sample and additive quantities. A means for mixing measured quantities of sample and additive is provided.

A flow injection analysis system where the flow is stopped intermittently was disclosed by Ruzicka et al in U.S. Patent 4,315,754. The process intermittently stops flow so that the reactions between the reagent and the sample may continue while the dispersion of the sample within the carrier stream is stopped by the cessation of movement of the carrier stream. This stoppage can take place either before or within the analyzer. The stoppage occurs in the analyzer when one wants to observe the reaction as it proceeds. The process requires a carrier stream and a discrete, well-defined liquid sample portion. The system calls for separate intermittently operated pumps to transport the carrier and injected sample to the analysis.

Saros discloses in U.S. 4,517,302 a sequence and coordination of system operations as well as calculating and monitoring the quality of results and providing data output in a variety of formats. In a continuous flow system, air or gas separates selected ones of the liquid segments.

According to a first aspect of the present invention there is provided an analysing apparatus for detecting properties and composition of liquid samples, the apparatus comprising:

supply means comprised of a plurality of sources for providing samples and reagents;

conduit means capable of receiving liquid samples and reactants and reagents from said supply means;

vacuum means connected to said conduit means and capable of creating a force for driving said liquid samples, reactants and reagents from said supply means through said conduit means and into said vacuum means;

a detector for sensing properties or the composition of said liquid samples positioned in said conduit means between said supply means and said vacuum means and capable of passing said liquid stream to said vacuum means;

and a combination of valves for controlling the vacuum created force;

characterised in that the combination of valves are arranged for controlling the vacuum created force to generate a liquid stream of liquid integral segments in the conduit means, the liquid stream consisting of essentially samples, reactant or reagent in the absence of air segments in the liquid stream whereby said liquid integral segments interface with each other.

The present invention provide means for creating an integral but segmented liquid stream flown through the analysis system. The liquid integrity of a fasioned stream is used to provide liquid segments of the observed sample and a reagent.

With this invention an analytical means can be provided for determining composition of a sample from a dispersion of the sample at a single interface between the sample and a reagent.

The detectors sense and take measurements and from the parameters obtained in the calibration step calculate the characteristics of the tested sample. The combination of the sample with the reagent produces detectable change in the composition of the fluid stream at the interface of the two liquid segments. Readings by a suitable detector are taken in this zone of change. These detections may be electrical conductivity, pH or photometric sensors, for example.

The invention further provides increased capability of flow injection analysis. In particular, the present invention enables methods of operating an intermittent flow, segmented integral liquid stream, sample analysis apparatus, including a new means in flow sample analysis for reducing the number of valves and their operations.

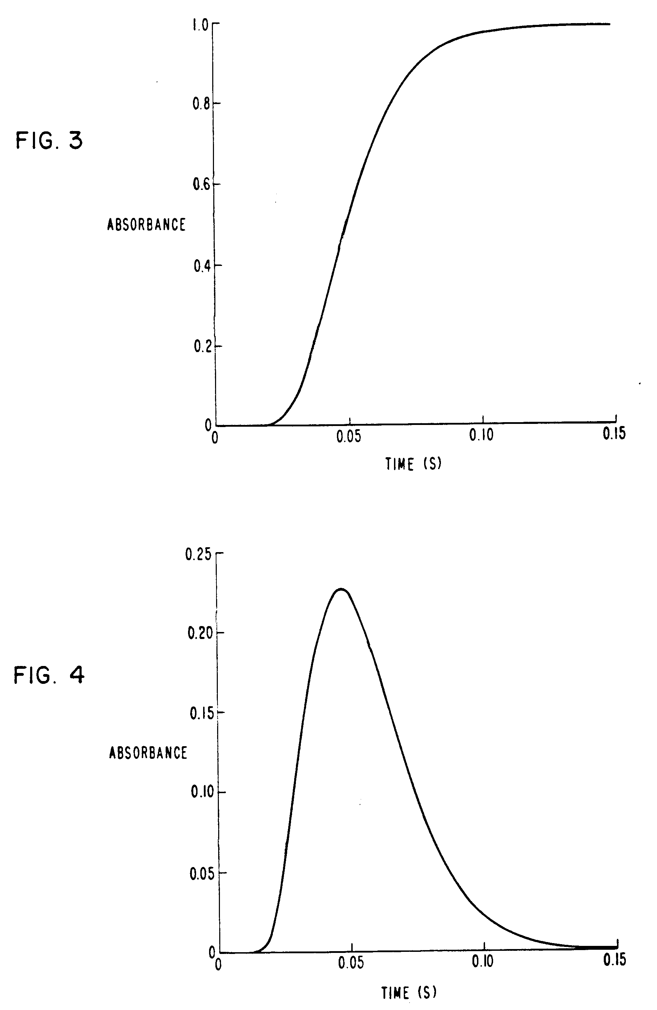

In one combination in the present system a zone of change takes place at the interface between the slug of the reagent and the slug of the sample in a discrete, segmented liquid flow in which there is no constraint on the volume of the segments. By step pulsing discrete segments of reagents and samples are fashioned and transported to a detector which scans data from the samples at the interfaces between the segments. The minimum size of a step pulse segment is such that nearly the original concentration of the fashioned segment appears at the detector. A typical detector response is illustrated in Figure 3. The flow is controlled by a single valve positioned in the flow downstream from the detector. The force for moving the liquid flow is provided by a vacuum which draws the fluid through the system and the control valve.

The present development uses a static injection analysis process in which liquid samples to be analysed and appropriate reagents are supplied through sample valves and reagent valves, respectively, to a sample manifold. The entire analysis system is driven by a vacuum pump connected to the end of the system through a vacuum valve. When the vacuum valve is closed no fluid flow takes place in the system. The sample valves and reagent valves are permitted to be operated from closed to open and vice versa only when the vacuum valve is closed. The vacuum valve is then opened to draw the sample or reagent through the manifold into the system. The volume of sample or reagent is determined by the period of time for which the vacuum valve is opened. All valves are operated under computer control in a pre-programmed sequence.

In addition to samples and reagents, the system can be provided with other inputs each connected through a valve to the manifold to provide fluids such as standard solutions, wash solutions, reactants and the like.

In a specific illustrated embodiment, the vacuum valve opened. Sample is thus drawn by the vacuum pump into the system. When a sufficient amount of sample is drawn into the system the vacuum valve and sample valve are closed, in that order. A reactant valve is then opened in order to supply reactant to the manifold. The vacuum valve is then opened and the reactant is drawn into the system to mix with the sample. This sequence may be repeated for more samples and reactants as required.

The reacted sample forms an interface with a reagent admitted subsequent to all reaction. The interfaces thus created are then pulled by the vacuum pump through the system under laminar flow conditions past a detector cell which generates a signal proportional to the concentration of the unknown material. This measurement is taken continuously before, at, and after the interface passes the detector. The signal generated by the detector cell is then analysed by a computer to determined the concentration of the unknown in the sample. The analysis is carried out useing the fluid mechanical model for plug flow with axial dispersion.

Preferred embodiments of this invention provide fluid injection analysis methods and devices which achieve excellent statistical accuracy and an economy in reagents. More particularly, a preferred embodiment of this invention provides an analysis of a liquid sample using an increased number of observations in comparing successively tested samples against a standard and also increasing the rapidity of analysis. A still further preferred embodiment employs a mathematical model that permits the comparison of detected data from successively observed samples with standards.

An important aspect of the system is that the liquids are controlled in a manner so as to permit analysis using the above mentioned fluid mechanical model for plug flow with axial dispersion. This is achieved by several devices used in the system. First, the reactants and sample are degassed immediately before use by passing the sample or reactants through a non-wetting tube of expanded polytetrafluoroethylene which is placed in a container under reduced pressure. The dissolved gases diffuse through the tube as the liquid is being drawn into the instruments. Second, the vacuum pump provides laminar flow free from perturbations.

Lastly, zero dead-volume valving is used in the system to avoid the creation of dead volume which could trap reactant or sample, or introduce gases into the system.

In the illustrated embodiment, the sample is diluted by passing the sample over a nonwetting membrane which contains small pores. Back pressure in the system is used to force the sample through the pores into a diluent directly beneath the membrane. By varying the amount of back pressure used, the composition of the diluted solution can be precisely adjusted .

It is a feature of the apparatus that no valve is turned on or off when flow is occurring through the apparatus; that is, the vacuum valve is always turned off when other valves are operated. These conditions are provided to prevent gaps within the flowing liquid. Each analysis is thus performed at the interface of two liquids formed by the valving sequence. Therefore, it is not necessary to have uniformly sized samples and there is no constraint on volume.

This invention will now be described by way of example with reference to the drawings, in which:-

Figure 1 is a block diagram of apparatus according to the invention;

Figure 2 is a flow chart illustrating operation of apparatus according to the invention;

Figure 3 is a graph illustrating a response curve of apparatus according to one embodiment of the invention;

Figure 4 is a graph illustrating a response curve of apparatus according to another embodiment of the invention;

Figure 5A and 5B together are a block diagram of apparatus according to the invention;

Figure 6 is a graph charting readings obtained with apparatus according to the invention;

Figure 7 is a view of a degasser device which can be used in apparatus according to the invention;

Figures 8 to 17 are graphs illustrating analysis carried out using apparatus according to the invention; and

Figures 18 to 23 are graphs illustrating analysis carried out using other apparatus according to the invention.

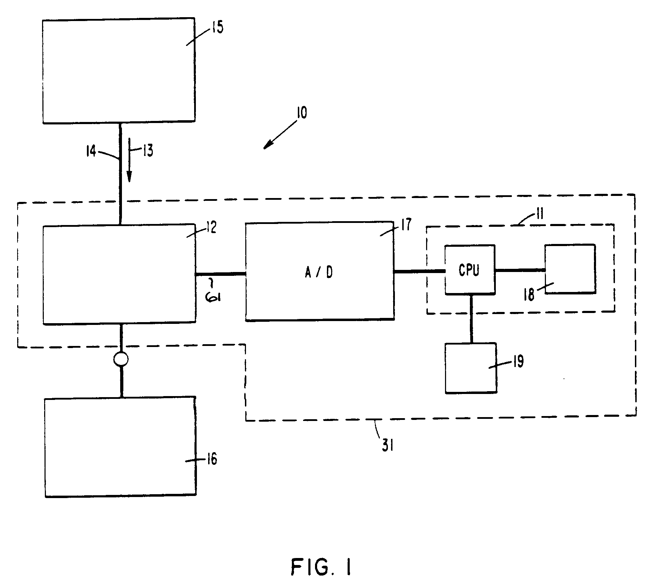

Figure 1 shows an apparatus comprising an analysis section 31 including a computer 11 which receives signals from a detector 12. In operation a segmented integral liquid stream 13 to be analyzed is passed to the detector 12 through tubing 14 from a sample introducing device 15. The liquid stream 13, represented by a directional arrow, is transported from the sample introducing device 15 to the detector 12 under the pull of a vacuum applied by a vacuum assembly 16 to be described below. The detector 12 scans samples in the stream 13 for characteristics of the composition, such as concentration. The data observed in the detector 12 is transmitted to the computer 11 as digital signals through an analog to digital converter 17.

The computer 11 takes the detector signals and provides analyses of samples of liquid from that data. The calculations for the analysis are done by linear and non-linear mathematical regression.

The data from the detector from the introduction of a standard is analyzed by the computer 11 using a nonlinear regression algorithm to determine the algebraic model parameters which characterize the flow system. These parameters are than subsequently used with a linear regression algorithm to determine the characteristics of a fashioned sample.

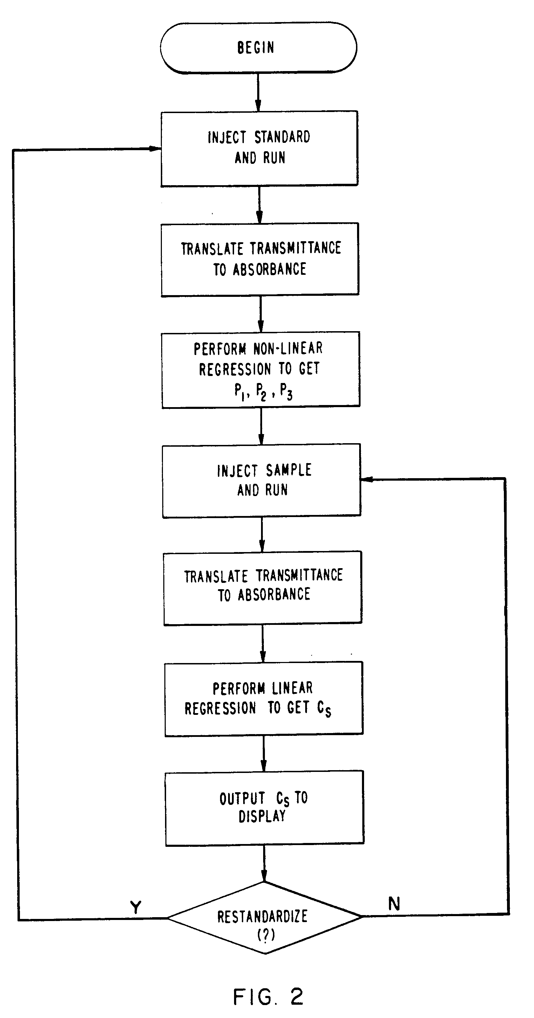

Reference is made to the sequence of events illustrated in Figure 2. A step pulse segment of standard of known concentration is fashioned and the transmittance of radiation as the standard reagent interface passes by the detector is observed by the computer. This transmittance signal is stored in the computer's RAM 18, see Figure 1 along with the elapsed time from the start of flow and subsequently converted to absorbance using the following equation.

$$Abs = \log_{10} T_o - \log_{10} T \qquad (1)$$

where $T_o$ is the transmittance of a perfectly clear and colorless solution and $T$ is the observed transmittance.

A mathematical model which describes the interface is give by the following equation.

$$Abs = (1/2)P_3 C^{std}\left[1 - erf\left(\frac{1 - t/P_2}{2\sqrt{P_1 t/P_2}}\right)\right] \qquad (2)$$

where the parameters P1, P2 and P3 are determined by non-linear regression of the model over the absorbance - time data. Parameters P1 and P2 are known as the dispersion number and average resident time of the device and characterize the extent of dispersion in the tube. They are functions of the geometry of the system and not of the concentration of the introduced species. Parameter P3 is simply the proportional constant that relates absorbance to concentration of the observed species of interest. It is precisely the determination of these parameters which constitutes instrument calibration. $C^{std}$ is a concentration of a standard and erf is the error function.

Equation 2 is used to calculate absorbance at a given point in time as follows:

The experimentally observed quantities in Equation 2 are Abs, the absorbance of the flowing stream at time, t. The experimental curve displaying the relationship of absorbance and time for the step pulse injection is given in Figure 3. The computer algorithm selects values of $P_1$, $P_2$, and $P_3$, computes the expression on the right hand side of Equation 2 and compares the calculated to the observed absorbance for each time, t. This procedure is repeated until the sum of $(Abs_{obsd}-Abs_{calc})^2$ at each time increment meets a predetermined criterion.

More specifically, initial "guesses" of values for $P_1$ and $P_2$ are input into the program and the numerical value of the term in the parentheses in Equation 2 is established. For illustration, assign the value, z to this term, thus modifying the equation to the form:

$$Abs = \tfrac{1}{2} P_3\, C^{std}\, [1-erf(Z)] \qquad (2a)$$

Since the error function, erf, has the form:

$$erf(Z) = \frac{2}{\sqrt{\pi}} \int_0^Z e^{-s^2}\, ds \qquad (2b)$$

the expression in the brackets may be evaluated explicitly by substitution of tabulated values of the error function. An initial estimate of $P_3$ is used to complete the calculation of the absorbance at point t. The sum of the square of the differences between the observed and the calculated absorbance at each point is used to guide the search function of the non-linear regression program toward better estimates of the P parameters, as indicated above.

Thus, a step pulse of sample of unknown concentration is fashioned and the transmittance of radiation as the sample/reagent interface passes by the detector is observed by the computer. This transmittance signal is stored in the computer's RAM 18 along with the elapsed time from the start of flow, and subsequently converted to absorbance using Equation 1. The same mathematical model that is used to perform the nonlinear regression is now used to calculate the sample concentration by performing a linear regression over the absorbance - time data for the sample. This results in an explicit expression for sample concentration:

$$C_s = \frac{\sum_{i=1}^{n} Abs_i\, x_i}{\sum_{i=1}^{n} x_i^2} \qquad (3)$$

$$x_i = \tfrac{1}{2} P_3 \left[ 1 - erf\left\{ \frac{\left(1 - \frac{t_i}{P_2}\right)}{2\sqrt{P_1 t_i}} \right\} \right] \qquad (4)$$

The P parameters thus establish upon injection of a standard, are used by the computer to calculate $C_s$ for each injection of a sample. Consider the four cycles illustrated in Table 1. The standardization is performed with the injection of the dye, Cycle 1. The specification of the P parameters reduces the curve fitting procedure for the step pulse injections of the samples to a simple linear regression technique:

$$Abs_i = C_s \chi_i$$

In this equation:

$C_s$ is the symbol for sample concentration,

$X_i$ is the single independent variable, defined by Eq(4),

Abs is the absorbance of the injected sample related to the independent variable Xi.

Since the experimental protocol outlined in Table 1 effectively identifies the absorbance to due interferants, a calibration curve of absorbance vs. sample concentration may be constructed as a straight line passing through the origin, i.e. if there were no sample, there would be no absorbance. Equation 3 states the formalism for determining the concentration of sample from such a line, by a linear regression technique, minimizing the residuals about the regression line. (R.E. Walpole, R.H. Meyers, "Probability and Statistics for Engineers and Scientist 2nd edition, Macmillan, N.Y., 1978, p. 284).

The mathematical model of equation 2 describes a sigmoidal curve as illustrated by Figure 3. This is a plot of the detector signal generated upon fashioning of a step pulse of standard or analyte adjustent to the reagent segment.

This plot illustrates the description of the standard/reagent interface and can be provided from the CPU on computer 11 on a display 19.

The mathematical analysis procedure described above for the step pulse fashioning can be applied with equal facility to conventional FIA impulse injection experiments, wherein the dispersion of the injection results in a peak curve typified by the curve in Figure 4. In doing so, both the sequence of mathematical operations and regression algorithms are the same, while equation 2 is replaced by an expression representative of the small injection volume.

$$Abs = \tfrac{1}{2}\, C\, P_3 \left[ erf \left\{ \frac{\delta/P_2 - (1 - t/P_2)}{2\sqrt{P_1\, t/P_2}} \right\} + erf \left\{ \frac{\delta/P_2 + (1 - t/P_2)}{2\sqrt{P_1\, t/P_2}} \right\} \right] \quad (5)$$

where C represents the injected species concentration and $\delta$ the duration of the injection (expressed in units of time).

For disclosures providing procedures useful for methods of adjusting model parameters of the type described herein reference may be made to "Dispersion of Soluble Matter in Solvent Flowing Slowly Through a Tube", G.I. Taylor, Proceedings of Royal Society of London, Series A, Vol. 219, p. 186 (1953); a description of non-linear regression algorithms in "Optimum Seeking Methods", D.J. Wilde, Prentice-Hall, N.Y., N.Y. (1964) pp. 145-150; and a description of statistical linear data regression in "Probability and Statistics for Engineers and Scientists"., MacMillan, N.Y., N.Y., (1978), chap. 8.

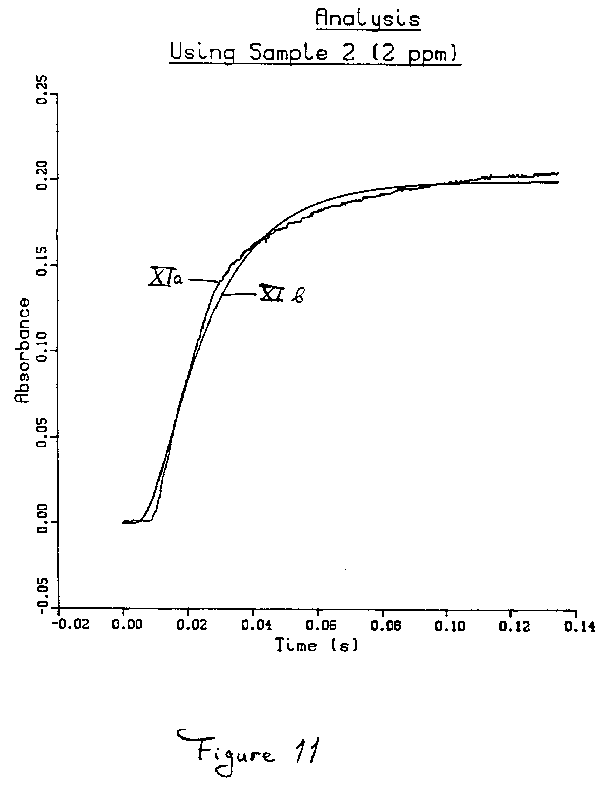

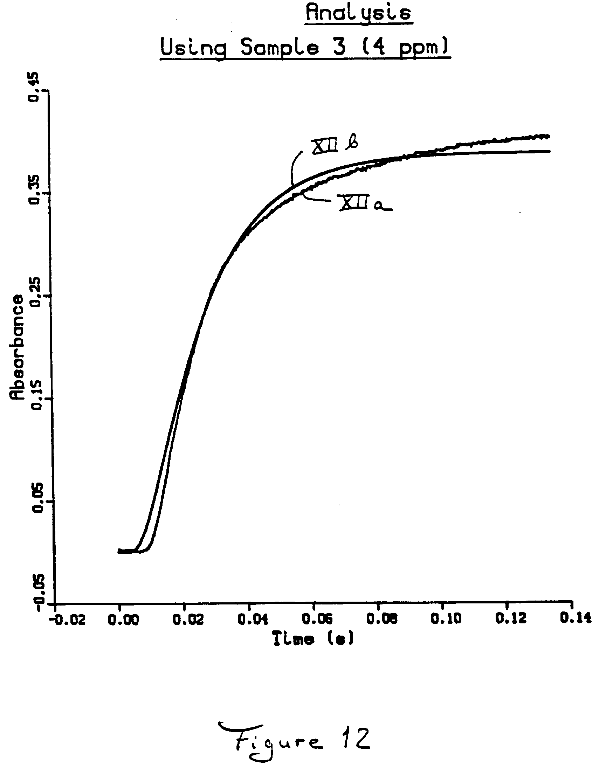

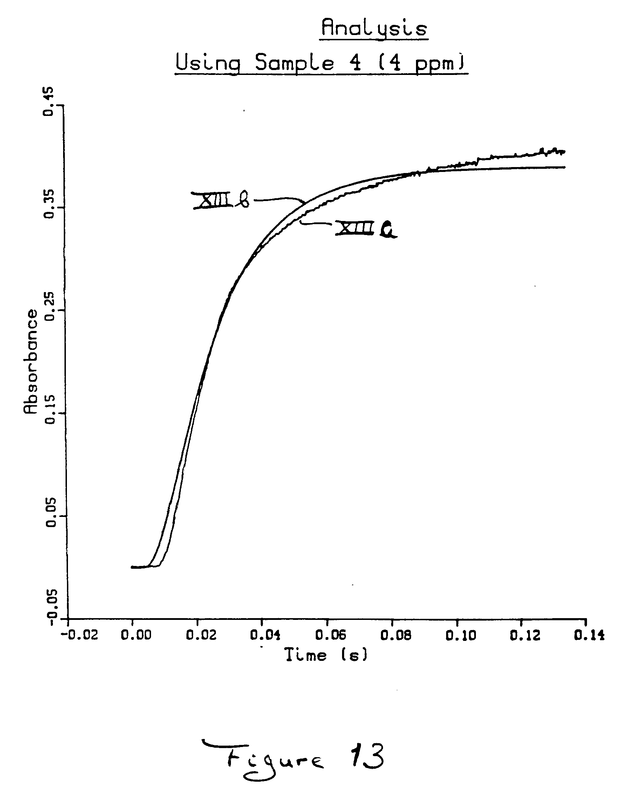

The mathematical regression calculations of the computer 11 are used to treat all of the rapidly collected points at the interfacial zone of the dispersion regardless of whether there is used the pulse segment portion or a well-defined impulse sample portion. These points are represented by the curves of Figures 3, 4, 8 to 23 and are used in analysis

The stream 13 in Figure 1 is an entirely liquid stream, the flow of which is stopped intermittently and consists of segments fashioned in an integral liquid stream. The segments are referred to here as pulse segments as a representation of transient quantities brought about by an intermittent application of a transporting force from a vacuum.

The entirely liquid stream consists of pulse segments of liquid fashioned as described below by non-continuous flow, but united together at interfaces to become integrated into the integral liquid stream. Thus, the pulse segments are separate fragments of the stream each cut off from adjoining segments by an interface so as to provide a finite part of the stream usually between two other parts of the stream and thus being with the other segments the constituent parts making up the stream.

The useful and effective size of an analyzed sample has a very wide range, so that the size of the sample is not critical except that the sample portion must be of at least such a size that nearly the original concentration of the pulsed segment appears at the detector upon analysis of the interface at the detector. Stated otherwise, in fashioning a sample pulse segment for analysis, the shape or form of the slug making up the pulse segment must be such that the detector can observe the analyzed interface from a point where no subverting dispersion in the sample has taken place to the interface itself. The stream 13 as illustrated and described herein is identified as a segmented integral liquid stream. All the segments making the whole are liquid and the whole stream consists entirely of these liquid segments so that in fashioning the individual pulse segments, they are integrated to unite and form the complete stream.

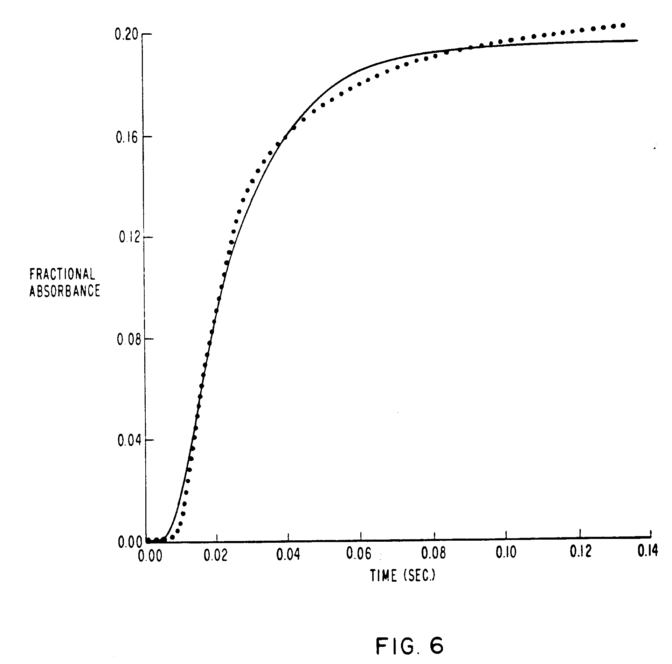

Figure 6 shows the curve record for the readings obtained from the dispersion data observed from pulse segments fashioned in the apparatus of Figure 1. The recorded analyzed samples are detected at intervals of 270 $\mu$ sec. and the observed absorbance is recorded.

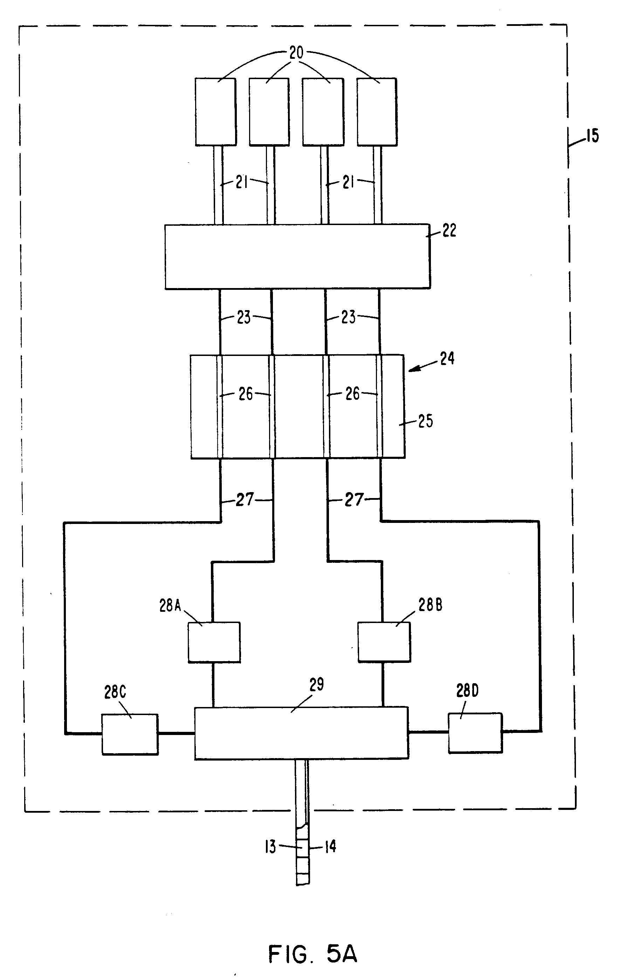

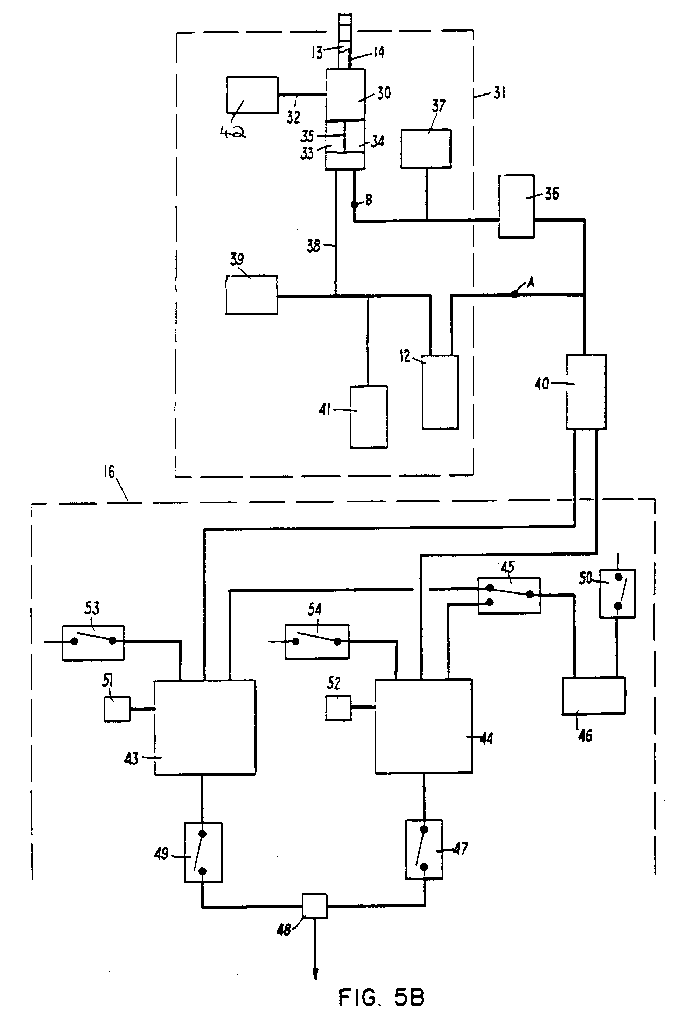

Referring to Figures 5A and 5B there is shown apparatus for fashioning the pulse segments of a segmented integral liquid stream and transporting the stream to and through the detector to perform single interface analysis for use in the apparatus of Figure 1. The sample introducing device 15, includes a plurality of tanks 20 from which samples and reagents may be individually drawn through a plurality of tubings 21 to a connector board 22 where the samples flow into a plurality of tubings 23 of reduced diameter.

The samples and reagents are next processed through a degasser 24 to release any dissolved gas in the samples prior to further handling and the eventual analysis. The degasser 24 comprises a vacuum sealed housing 25 containing a porous tube 26 for each of the individual tubings 23 and its respective sample and reagent. As described in greater detail below, by adjusting the vacuum in housing 25 in relation to the porosity of the tubes 26 and the rate of stream flow, the liquid stream flow of the sample can be rendered substantially free of gas upon transport through delivery tubes 27 and dead zero valve 28. Typical tube sizes for tubes 23 and 27 and those throughout are 30 mil internal diameter.

A manifold 29 fashions pulse segments to make up a segmented stream 13 in tubing 14 as shown in the partly broken away section of tubing 14 in Figure 5A. The stream 13 is transported to a diluter 30 (Figure 5B). A diluent is introduced into the diluter 30 through a tube 32 from a suitable source of supply. The sample stream 13 from manifold 29 and the diluent are mixed in the diluter 30 and the product transported to the detector 12 for observation and determination.

The apparatus illustrated in Figures 5A and 5B is identified herein as a step pulse fashioning system.

Force for the segmented flow 13 is provided by a vacuum assembly 16 through vacuum valves 36 and 40 which when opened draw the sample or reagent into the apparatus. The volume drawn in is controlled and determined by the period the valves 36 and 40 are open.

In a normal operational sequence of the apparatus the vacuum driving it may be in the range of 6.35cm to 38cm (2 1/2 to 15) inches of Hg. The valves are solenoid drive pinch valves. Referring to the operation of the apparatus reference is made to the following Table 1 which gives the sequence of operation of the valves and describes the results of each operation. The flow rate is per minute, preferably 2-4.

The diluter 30 contains two small chambers 33 and 34 separated by a membrane 35. A suitable membrane 35 is a Teflon membrane with a 1.0 micron pore size supported in a non-woven polypropylene sheet.

On the first step of operating Cycle I as charted in Table 1, under the pulling force provided by the vacuum assembly 16 through valve 36 the stream is drawn in the apparatus and the diluter 30 is filled from the manifold 29 by opening a flow through the dead zero valves 28a, 28b, and valve 36 with valve 40 closed. The flow of the stream 13 through the diluter 30 is controlled by valves 28a, 28b and 36, which transport at least one pulse segment of the stream to the point B between the diluter 30 and a valved source of air pressure 37 which provides back pressure. In Step 2 the valves 28a, 28b and 36 then close. This positioning of the pulse segments of the integral liquid stream 13 in the sample side of the diluter 30, provides a reservoir of fashioned segments on the sample side of the membrane in chamber 33 of the diluter 30 to provide a supply of liquid available to be forced through the membrane 35 under the back pressure asserted from the pressure source 37. The pulse segments are fashioned in the operation of the valves 28a and 28b introducing fluid flow into the manifold 29 under the transporting force put in action from the vacuum assembly 16. It will be understood that this fashioning of the pulse segments is directly concerned with the formation of the segmented integral liquid stream described above and illustrated by stream 13 in the embodiment of Figure 5.

The porous membrane 35 of the diluter 30 is not wetted by either the liquid of the segmented stream 13 or the diluent from tube 32, but is permeable to the liquid of the segmented stream 13 upon the application of back pressure on the reservoir consisting of the segmented stream positioned upstream from point B into the diluter 30.

Next, the Step 3 in the sequence of analysis Cycle I, afterproviding the reservoir of pulse segments, first valve 42 and valve 40 are opened and then a suitable valve is opened at the source of pressure 37 exerting positive pressure on chamber 34 side of the membrane 35 in the diluter 30. The pulse segment permeates through the membrane 35 and mixing with the diluent in chamber 33 is drawn in a diluted state from the diluter 30 by force exerted from the vacuum assembly 16 by the opening of a main control valve 40 positioned downstream of the detector 12. Varying the amount of back pressure used, alters the amount of the solution transferred to the diluent. The flow of the diluted segmented stream 13 from the diluter 30 in a tubing 38 is controlled by valve 40 and is positioned by transporting the pulse segments to a point A downstream from the detector 12 so as to assure filling the detector 12 with sample or reagent in pulse segments.

The delivery of fashioned pulse segments of sample or reagent to the detector 12 may include suitable valve-controlled apparatus for introducing other substances into the analyzed liquid of the segmented stream. In the embodiment of Figure 5 valves 39 and 41 illustrate the controls for providing dye through valve 39 and a reagent for forming the appropriate interface through valve 41 from suitable sources.

In one example of an analysis in the embodiment of Figure 5 valves 40, 42, and the pressure source 37 are opened to transport diluted pulse segments from the diluter 30 in tubing 38 and form a slug mixture of the pulse segment and the valve 40 is closed to position the slug mixture upstream from point A. Then valve 41, and valve 40 are opened to introduce through valve 41 a salt to form an interface. The interface flows through the detector 12 and the detector 12 senses and takes measurements. This observed data is transmitted on a line 61 to the analog-to-digital converter 17 as described above. With the completion of the readings the control valves 40 and 41 are closed and the sequence of steps of that cycle of analysis has been completed.

Table 1 charts the sequence of steps in four analysis Cycles I, II, III and IV in a characteristic example of the operation of the apparatus illustrated in the embodiment of Figure 5. The stream structure for each of these cycles is different thus illustrating the adapatability, versatility and flexibility of the apparatus. Each of the Cycles I, II, III, and IV consists of a sequence of six steps with each of the steps related to the states of the valves which fashion the segments and control the transport of the structured stream, and each step characterized by the stream flow.

The stream structures processed in the respective Cycles I, II, III and IV are as follows:

| Cycle | Stream Structure |
|-------|------------------|
| I | H$_2$O, Acid and Dye |
| II | Sample and Acid |
| III | Sample, Acid and Dye |
| IV | Sample, Standard and Dye |

## TABLE 1

| | Steps | Valving Sequence OPEN | Valving Sequence CLOSE | Characteristics of Steps |
|---|-------|------|-------|--------------------------|
| CYCLE I | 1 | 1,28a,28b,36 | | FILL DILUTER AND TUBE TO B |
| | 2 | | 1,36,28b,28a | FLOW STOPS |
| | 3 | 42,39,40,37 | | FLOW THROUGH CELL TO A SLUG MIXTURE FORMED, WATER, STD, DYE. |
| | 4 | | 1,37,40,39,42 | FLOW STOPS |
| | 5 | 41, 40 | | FORMS INTERFACE. FLOW THROUGH FLOW CELL AND READ A/D, WATER, STD &DYE. |
| | 6 | | 1, 40, 41 | FLOW STOPS |
| CYCLE II | 7 | 1,28b,28c,36 | | FILL DILUTER WITH SAMPLE + ACID. FILL TUBE TO POINT B |
| | 8 | | 1,36,28c,28b | FLOW STOPS |
| | 9 | 42, 40, 37 | | FLOW BEYOND A SAMPLE IS DILUTED BY ACID AND FORMS SLUG |
| | 10 | | 37, 40,42 | FLOW STOPS |
| | 11 | 41, 40 | | FORMS INTERFACE. FLOW THROUGH FLOW CELL AND READ A/D. (sample & acid) |
| | 12 | | 40, 41 | FLOW STOPS. |
| CYCLE III | 13 | 1,28b, 28c, 36 | | FILL DILUTER AND TUBE TO POINT B |
| | 14 | | 1,36, 28c,28b | FLOW STOPS |
| | 15 | 42,39,40,37 | | MIXES DYE WITH DILUTED SAMPLE, AND ACID. FLOW THROUGH FLOW CELL TO A |
| | 16 | | 40, 39, 37,42 | FLOW STOPS |
| | 17 | 41, 40 | | FORMS INTERFACE. FLOW THROUGH FLOW CELL AND READ A/D. (SAMPLE, ACID, & ) |
| | 18 | | 40, 41 | FLOW STOPS |
| CYCLE IV | 19 | 1,28c, 28d, 36 | | FILL DILUTER AND TUBE TO B |
| | 20 | | 36, 28d, 28c | FLOW STOPS |
| | 21 | 42,39,40,37 | | FLOW THROUGH CELL TO A SLUG MIXTURE FORMED SAMPLE, STD, DYE. |
| | 22 | | 37,40,39,42 | FLOW STOPS |
| | 23 | 41, 40 | | FORMS INTERFACE. FLOW THROUGH FLOW CELL AND READ A/D (SAMPLE, STD, & DYE |
| | 24 | | 40,41 | FLOW STOPS |

Referring to the operation of the vacuum assembly as embodied in Figure 5, two different waste reservoirs 43 and 44 are connected via three-way valve 45 to a vacuum pump 46. With the three-way valve 45 connecting reservoir 43 to the pump 46 and switch 50 in the appropriate position, as illustrated, reservoir 43 is being evacuated and simultaneously reservoir 44 is available for exerting the transporting force of the system through valve 40. Thus during an analysis cycle the reservoir 44 draws the stream 13 in the system of Figure 5 when valve 40 is open. At the close of the cycle, liquid has collected in the reservoir 44 and the observed data has been collected and transmitted from detector 12. At this point in the step sequences a vent valve 54 and a dump valve 47 opens to drain the contents of reservoir 44 through a suitable outlet 48.

The next cycle begins with valve 45 and switch 50 switching to connect reservoir 44 to the vacuum pump 46, a vacuum created in reservoir 44 after the vent valve 54 and dump valve 47 are closed, while the now evacuated reservoir 43 is available to exert the transporting force in the system. Thus the reservoirs 43 and 44 are alternately evacuated, filled with liquid, dumped and reevacuated. A dump valve 49 drains reservoir 43 through the outlet 48.

A switch 50 is connected to actuate the vacuum pump 46. Switches 51 and 52 are the liquid level actuators for reservoirs 43 and 44, respectively, while valves 53 and 54 provide venting for the respective reservoirs 43 and 44.

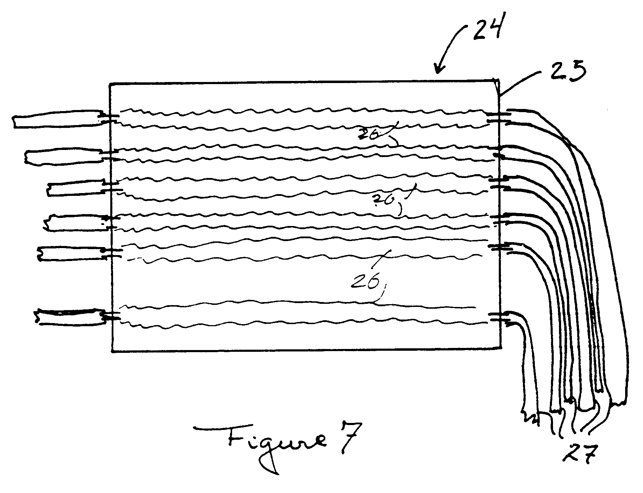

Figure 7 is a detailed illustration of the degassing stage of the system embodied in Figure 5. As noted above, the degasser apparatus 24 has vacuum sealed housing 25 which is suitably evacuated to provide reduced pressures within the housing. The porous tubes 26 conduct the system liquid through the housing 25 while causing gases within the liquid to be removed from the liquid. These tubes 26 may be composed of a number of different materials. The tubes 26 are suitably inert, porous material which is not wetted by the liquid. In one embodiment the tubes 26 are composed of Gore-tex tubing with 2 micron pores.

Effective degassing in the degasser 24 is directly related to the difference between the ambient pressure within the housing 25 at which gas passes through the tubing 26 and escapes from the liquid stream and the ambient pressure at which water will seep through tubing 26.

The housing 25 is evacuated to provide a pressure differential of about 25 cms (10 inches) of mercury between the external pressure in the housing 25 and the internal pressure in the tubing 26.

This pressure differential can range from a pressure one-tenth higher in the tubing 26 than the external pressure up to a pressure in the tube which is $8.83 \times 10^4$ Pa (12.8 pounds per square inch) higher in the tubing.

The length of this tubing 26 is selected or adjusted to allow complete degassing of the liquid within a given time period for the flow rate.

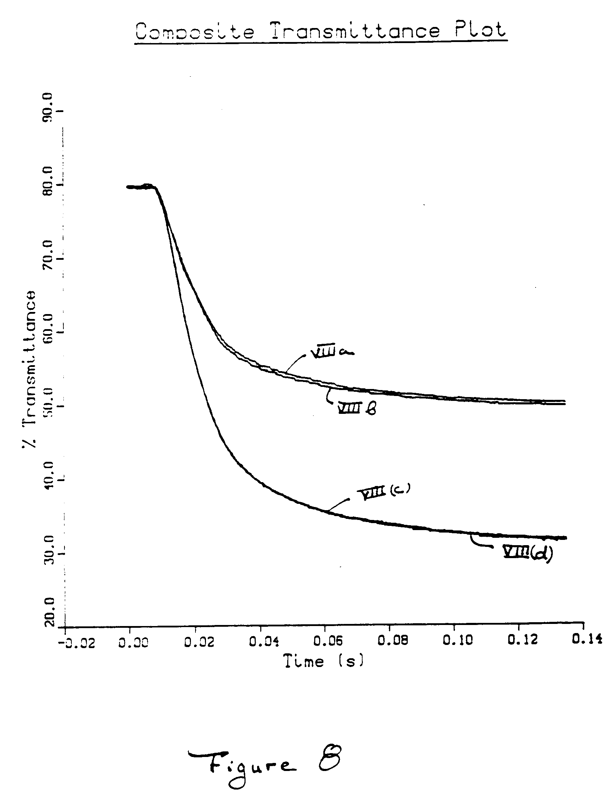

Figure 8 to 17 show the curve records for the readings obtained from the dispersion data observed from pulse segments fashioned in a system of the nature of the systems illustrated in Figures 1, 5A and 5B. The recorded analyzed samples were detected at intervals of 270 $\mu$ sec and the observation recorded. The data was analyzed by a computer using the nonlinear regression algorithm to determine the algebraic nodel parameters characterizing the methyl or orange dye and alum which was analyzed in the flow system. These parameters were subsequently used with the linear regression algorithm to determine the concentrations of various samples of methyl orange dye and alum.

The plotted cuves of these Figures 8 to 17 illustrate the indicated values that were detected in the flow cell 12 of the system by readings taken every 270 $\mu$ sec. and analyzed and processed in the calculations described above. In general these plotted curves show the determination of the composition of the analyzed liquid slugs in the integral but segmented liquid stream at a single interface. The curves are of sigmoidal shape. The curves illustrate the results that were obtained and in analysis by using the liquid integrity of a fashioned stream to provide liquid segments or slugs, for observation, analysis and calculation. .

Figure 8 is a chart illustrating the application of this invention to the detection and observation of dye concentrations. In graphical form it depicts the curves representing the results of detection of methyl orange dye in step pulse segments of discrete segmented flow conditions. Samples a, b of 2 ppm of methyl orange and samples c, d of 4 ppm of methyl orange were passed in segments through the flow cell 12 and transmittance values against time were detected as illustrated in the plotted curves a, b, c, d of Figure 8.

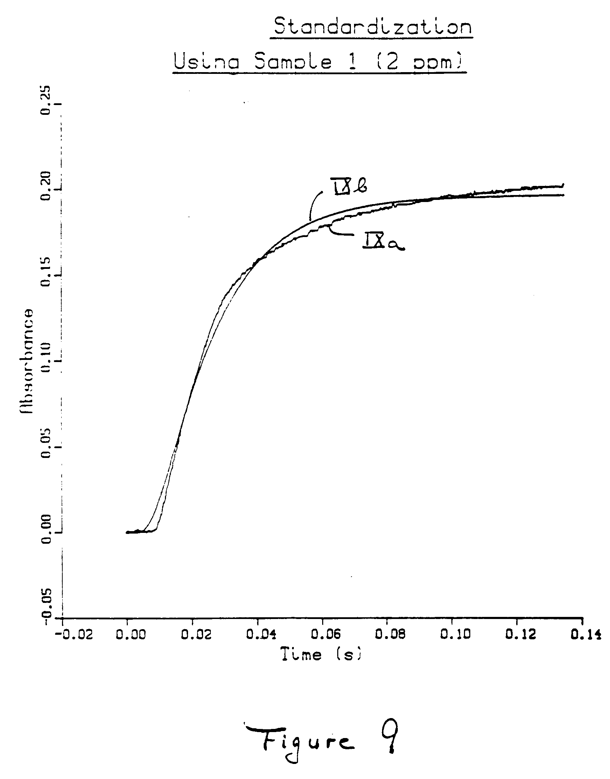

Figure 9 shows the results of standardization of the apparatus of the nature of Figures 1, 5A and 5B for detecting concentrations of methyl orange dye using Sample 1 having a concentration of 2 parts per million of methyl orange introduced into the system.

Figure 9 illustrates the results from a determination from a sample 1 of 2 ppm drawn through the system. This determination is a standardization procedure in accordance with the descriptions for providing a model prediction curve related to methyl orange specimens. The recorded data was processed in a computer by non-linear regression to determine model parameters P1, P2, P3 and the determination of the methyl orange concentration. This is non-linear regression of the sample over absorbance-time data detected in the cell 12 according to the calculations set forth above. The curves which represent a large number of readings, represent the plot of the concentration of methyl orange dye detected in the sample 1 by detection and observation at the interface between the sample segment and the reagent in the manner described above.

Curve IXa illustrates the observed and detected data and IXb represents the model prediction curve.

In the non-linear regression of the standardization procedure illustrated by Figure 9 by the equation (2) above the observed, analyzed and calculated results provide the following:

Parameter P1 - 0.6856

Parameter P2 - 0.0231 sec.

Parameter P3 - 0.0984 units of reciprocal ppm.

which were parameters for calibration and the results of the standardization procedure. In this non-linear regression the C Std of equation (2) is 2 ppm.

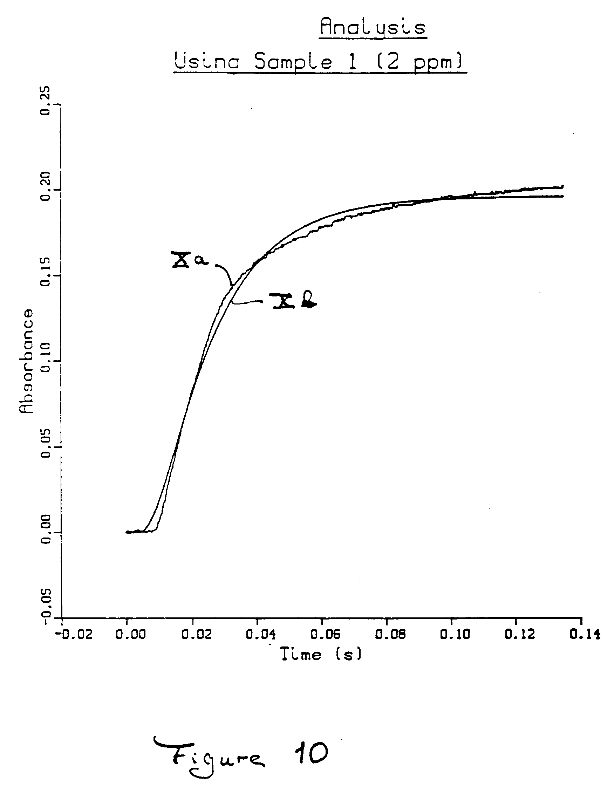

Figures 10-13 illustrate the analysis of an unknown sample of methyl orange using the linear regression of equation (3) to (4). Curve Xa depicts the observations converted to absorbance obtained by the analysis of Sample 1. Curve Xb is the model prediction curve for that sample and indicates that concentration is 2.000 ppm because of the linear regression described in equations (3) and (4).

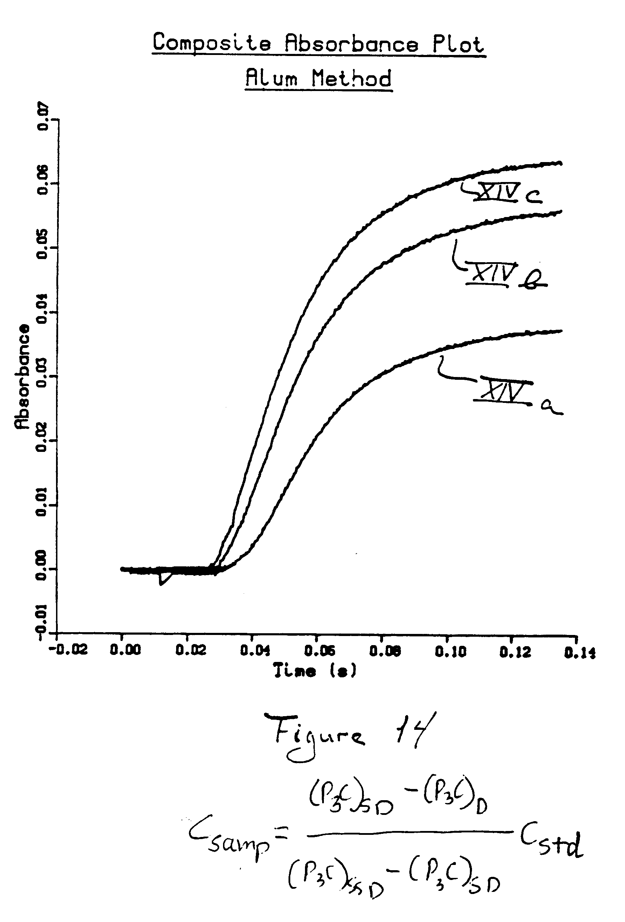

Figures 14 thru 17 illustrate the example of applying the technique to the chemical analysis of standard addition and corresponds to the instrument described in Figures 1, 5A and 5B and the chart of Table 1.

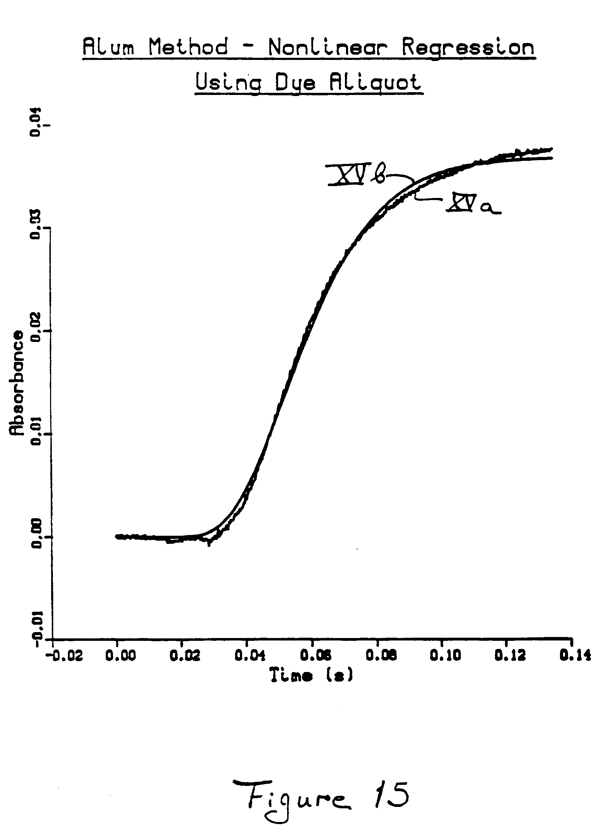

In Figure 14 curve XIVa is the calibration curve to obtain the flow parameters, curve XIVb is the curve of the analysis of the sample and curve XIVc pertains to the analysis of the sample which contains in addition an added standard. Figure 15 shows the standardization of the instrument using the dye aliquot using equation (2). The parameters determined were

P1 = 4.4048

P2 = 0.0579 sec.

P3C = 0.0369

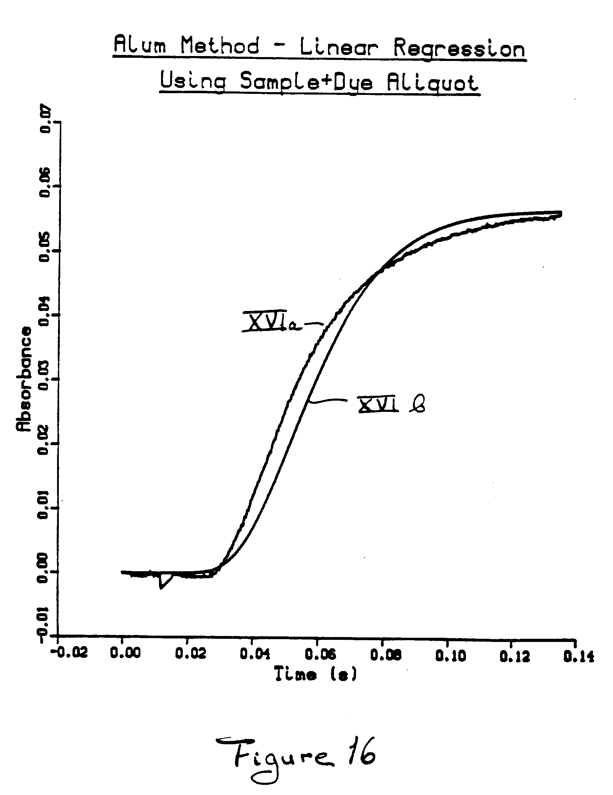

Figure 16 represents linear regression analysis done on the sample segment as represented by curve XIVb of Figure 14. The $P_3C$ is 0.05694.

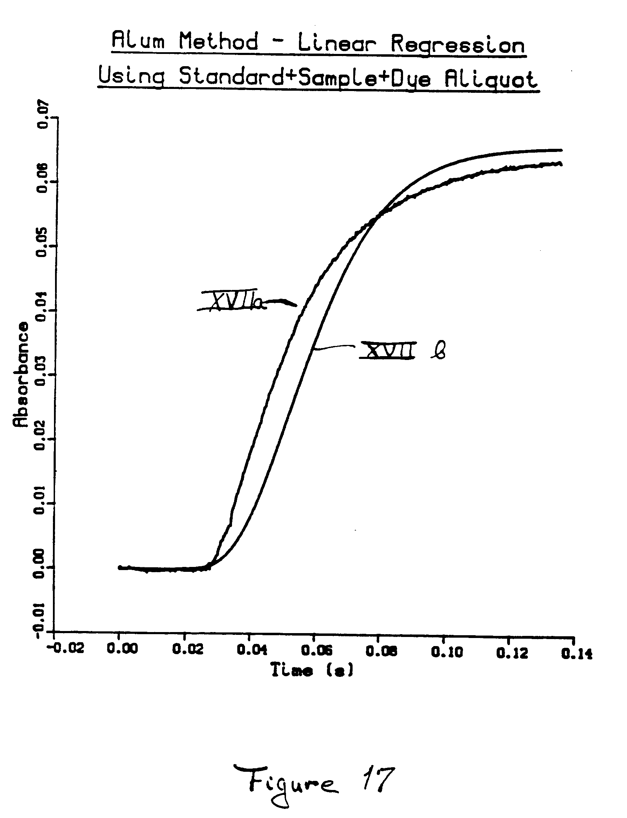

Figure 17 represents linear regression analysis done on the sample plus added standard segment represented by curve XIV c.

The $P_3C$ value was 0.6609.

The result of the three analyses are combined using the following equation to determine the sample concentration of alum

$$C_{samp} = \frac{(P_3C)_{SD} - (P_3C)_D}{(P_3C)_{SSD} - (P_3C)_{SD}} C_{std}$$

The result was 421 ppm as related to the known concentration of 400 ppm.

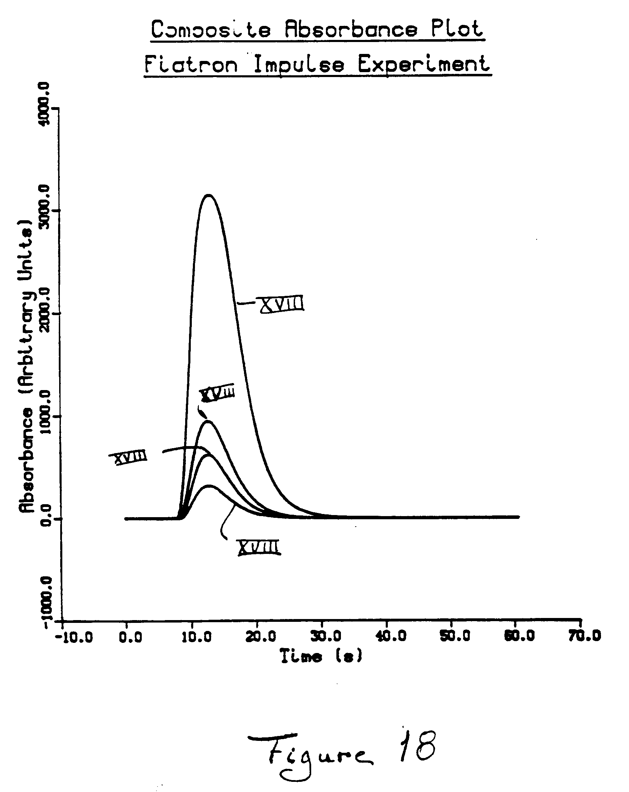

Figures 18 to 23 show curve records for readings obtained from dispersion data observed from the use of conventional flow injection instrument to analyze in accordance with this invention. In this embodiment analysis is carried out according to this invention by using conventional flow injection apparatus to prepare a mode prediction curve for the determination of the characteristics of a component in the flow injection analyzer apparatus.

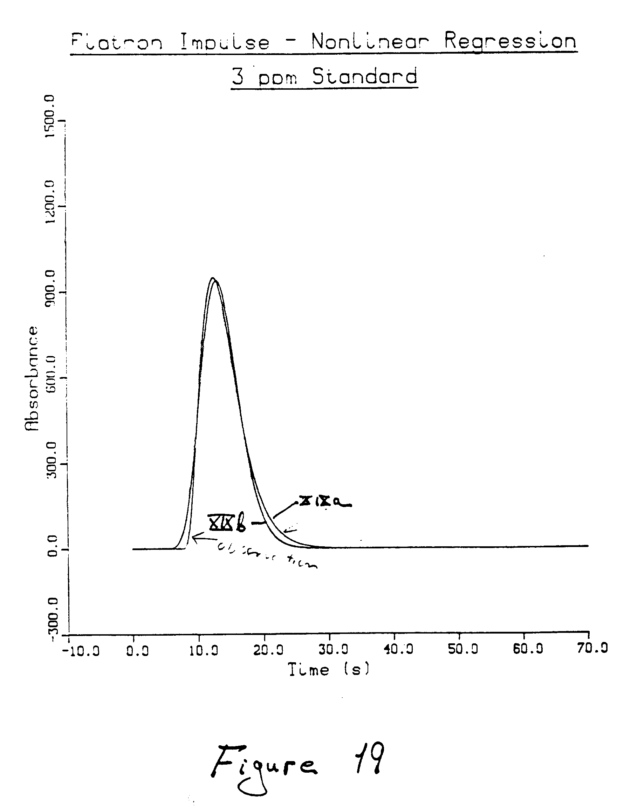

Figure 18 illustrates curves depicting the experimental observations of absorbance for methyl orange dye in four concentrations, 1, 2, 3 and 10 ppm, curves XVIII(a), XVIII(b), XVIII(c), and XVIII(d) respectively. Figure 19 depicts the observed data curve XIXa for the 3 ppm methyl orange injection which was used as the standard. This curve XIXa represents the observation of the absorbance as a function of time observed by the photodetector. Curve XIX(b) represents the model prediction curve resulting from non-linear regression of the curve XIXa data using the equation(5). The close coincidence of curves XIXa and XIXb is noted. The parameter values obtained were

$P_1$ = 12.74

$P_2$ = 13.29 sec

$P_3$ = 1682

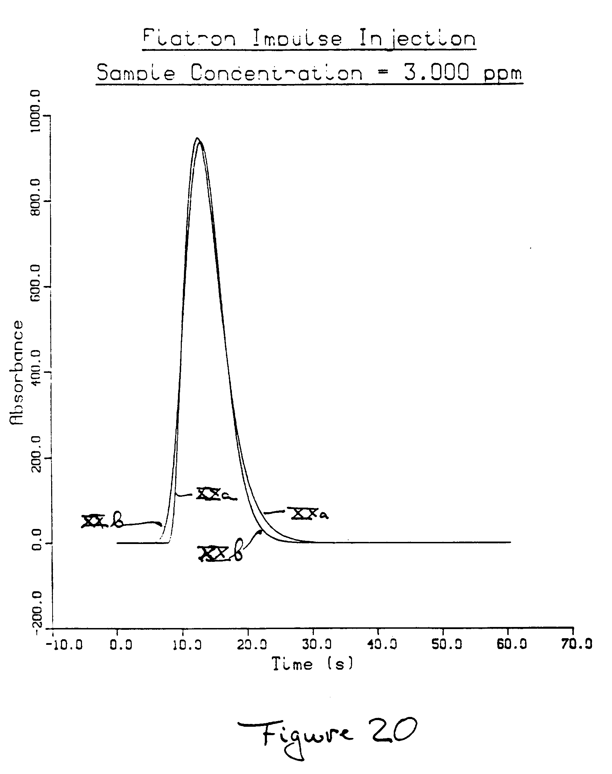

Figure 20 depicts the analysis of a sample using the nodel parameters obtained in the standardization step described above. Curve XXb is the same as curve XIXb for the 3 ppm generated by different means, namely linear regression. Curve XXa is the result of the observation of the 3 ppm sample of Figure 20.

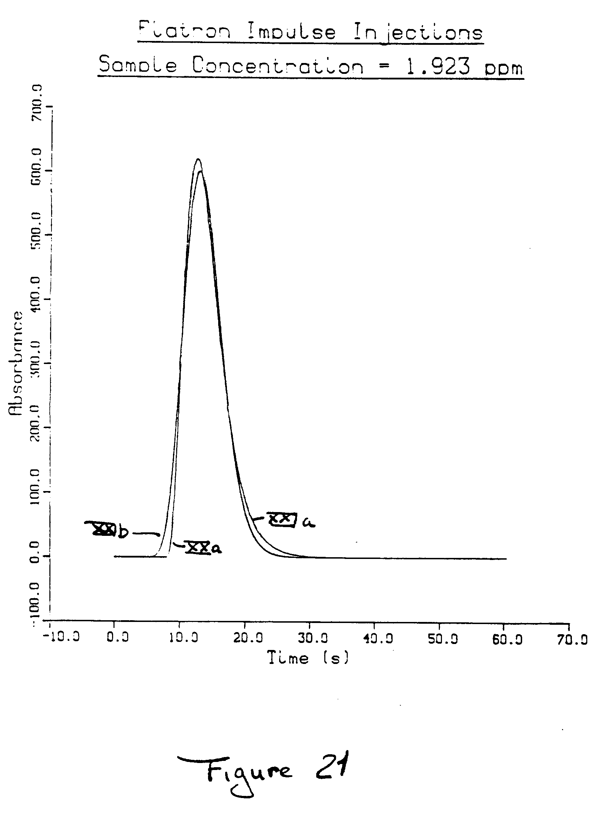

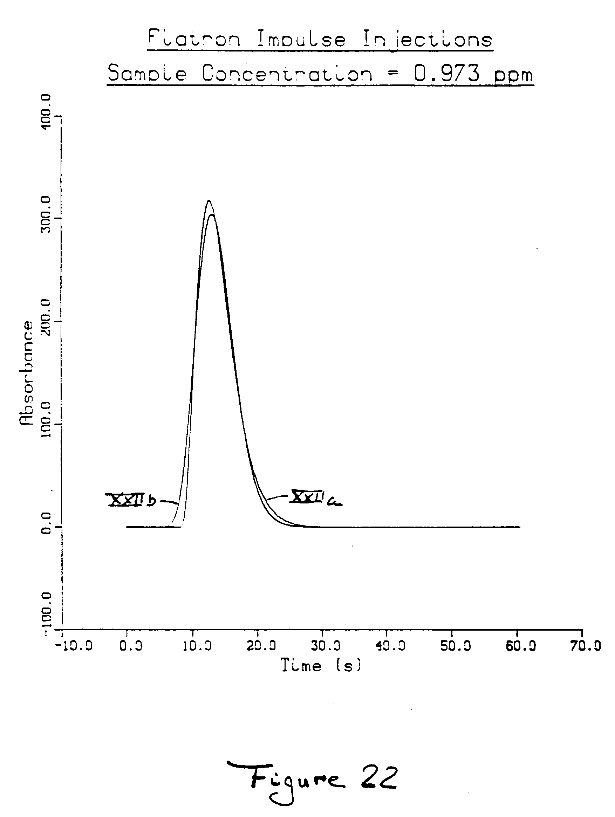

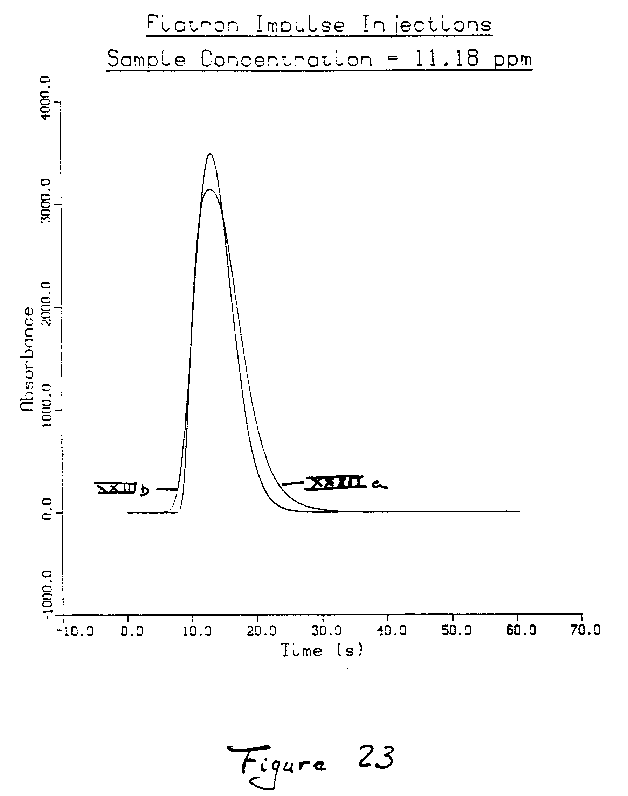

Figures 21, 22 and 23 illustrate examples of carrying out the analysis similar to that of Figure 20 with samples of the concentration of 2 ppm for Figure 21, 1ppm for Figure 22, and 10 ppm for Figure 23. The results are listed in the lengends in the respective figures.

EP 0 247 800 B1

Among other advantages of the present invention it is to be noted that in the analysis it is not necessary to analyze the entire curve to do the analysis. All that is needed is any portion of the curve that is illustrated in the figures, providing that the model is sensitive to that section.

Further, when the measured quantity is not a linear function of concentration it is still possible to do the analysis with only one additional calibration point.

**Claims**

1. An analysing apparatus for detecting properties and composition of liquid samples, the apparatus comprising:

supply means (15) comprised of a plurality of sources (20) for providing samples and reagents;

conduit means (14) capable of receiving liquid samples and reactants and reagents from said supply means (15);

vacuum means (46) connected to said conduit means (14) and capable of creating a force for driving said liquid samples, reactants and reagents from said supply means (15) through said conduit means (14) and into said vacuum means (46);

a detector (12) for sensing properties or the composition of said liquid samples positioned in said conduit means (14) between said supply means (15) and said vacuum means (46) and capable of passing said liquid stream to said vacuum means (46);

and a combination of valves (28a, 28b, 28c, 28d, 36, 37, 39, 40, 41, 42) for controlling the vacuum created force;

characterised in that the combination of valves are arranged for controlling the vacuum created force to generate a liquid stream of liquid integral segments in the conduit means (14), the liquid stream consisting of essentially samples, reactant or reagent in the absence of air segments in the liquid stream whereby said liquid integral segments interface with each other.

2. An analysing apparatus according to Claim 1 further comprising means for observing properties of the samples in the detector (12) and providing data in digital signals correlated to said observed properties, means responsive to observation of known property values of an injected standard drawn through the detector to generate parameter values, summarized in digital form, the evaluating observed properties of tested injected samples through said detector including means for performing in a computer calculation from the data obtained from the known speciment the non-linear regression for determining the algebraic model parameters which characterize the flow system, which equation is

$$Y_{(t)} = \frac{1}{2} P_3 C_0 \left[ 1 - erf \left\{ \frac{(1 - t/P_2)}{2\sqrt{P_1 \frac{t}{P_2}}} \right\} \right]$$

$P_1$, $P_2$ and $P_3$ being three parameters, Co characteristic of the specimen sample and Y the detected property, storage means for storing digital signals, said digital signals summarizing in digital form model parameter values of the apparatus, and means for repetitively performing in the computer calculations from data obtained from injected liquid samples by linear regression to obtain values of a property of each sample which is

12

$$C_s = \frac{\sum_{i=1}^{n} y_i x_i}{\sum_{i=1}^{n} x^2}$$

$$x_i = \frac{1}{2} P_3 \left\{ 1 - erf \left[ \frac{1 - t_i / P_2}{2 \sqrt{P_1 t_i / P_2}} \right] \right\}$$

where $P_1$ is the dispersion number $P_2$ is the average residence time, $P_3$ is the proportionality constant relating to the detected property to the species property of interest ($C_s$), and said system comprising means responsive to said obtained values for rapidly obtaining data and recording property values of samples.

3. An analysing apparatus according to Claim 1 wherein said detector comprises means for detecting at least one concentration of a liquid dispersion in an interfacial zone of a step pulse fashioning of said liquid in an integral segmented stream; the apparatus further including computation means (12), having means for recording data on the detected data, and means for non-linear regression of the detected data of a said interfacial zone, means for storage of the data after non-linear regression, and means for processing detected data after non-linear regression of another interfacial zone of a step pulse fashioning.

4. An apparatus as claimed in Claim 3, characterised in that model parameters are calibratable and stored in said recording means, said apparatus having means for comparing therewith detected data after non-linear regression of an interfacial zone of a step pulse injection.

5. A method for analysing liquid samples in a detector for the contents of liquid compositions:
   by supplying liquid samples, and reactants or reagents and creating a vacuum force for driving said liquid samples, and reactants or reagents through a detector;
   characterised by the steps of:
   drawing a sample into a liquid stream by a control valving means under a vacuum force, drawing a reagent into a liquid stream by a control valving means under a vacuum force;
   controlling the flow of the liquid stream under the vacuum force by a vacuum valving means positioned between a vacuum source and said control valving means;
   forming a non-air segmented, integral liquid stream of non-continuous flow consisting essentially of samples, and reactants or reagents in the absence of air segments in the stream;
   injecting a sample of known properties into said non-air segmented integral liquid stream and forming an interfacial zone of a step pulse comprised of said liquid sample in a non-air segmented, integral stream;
   observing properties of the concentration of the dispersed liquid of the known sample at the interfacial zone in a series of observations and providing data in digital signals correlated to said observed properties;
   performing in a computer calculations on the data obtained from the known samples, obtaining from a mathematical evaluation algebraic model parameters which characterise the flow system;
   storing digital signals and said model parameter values characteristic of the flow system in digital form;
   obtaining repetitively data from interfacial zones of step pulses of liquid samples repetitively injected in the non-air segmented, integral stream of non-continuous flow; and
   repetitively performing in said computer calculations, from the obtained data, to obtain values of a property of each sample.

**Patentansprüche**

1. Analysegerät zum Detektieren der Eigenschaften und Zusammensetzung von flüssigen Proben, bestehend aus:

einer Zuführeinrichtung (15) mit einer Vielzahl von Quellen (20) zum Versorgen mit Proben und Reagenzien;

Leitungsmitteln (14), die aus dieser Zuführeinrichtung (15) flüssige Proben, Reaktionsmittel und Reagenzien aufnehmen können;

einer Vakuumeinrichtung (46), die an die Leitungsmittel (14) angeschlossen ist, und eine Kraft zum Antreiben der flüssigen Proben, Reaktionsmittel und Reagenzien von der Zuführeinrichtung (15) durch die Leitungsmittel (14) und in die Vakuumeinrichtung (46) erzeugen kann;

einem Detektor (12) zum Erfassen der Eigenschaften oder der Zusammensetzung der flüssigen Proben, die in den Leitungsmitteln (14) zwischen der Zuführeinrichtung (15) und der Vakuumeinrichtung (46) positioniert sind, und durch den der Flüssigkeitsstrom zur Vakuumeinrichtung (46) durchgeht; und einer Kombination aus Ventilen (28a, 28b, 28c, 28d, 36, 37, 39, 40, 41, 42) zum Steuern der durch das Vakuum erzeugten Kraft;

dadurch **gekennzeichnet,** daß die Kombination aus Ventilen zum Steuern der durch das Vakuum erzeugten Kraft angeordnet sind, um in den Leitungsmitteln (14) einen Flüssigkeitsstrom aus flüssigen, integralen Segmenten zu erzeugen, wobei der Flüssigkeitsstrom im wesentlichen aus Proben, Reaktionsmittel oder Reagens, bei Abwesenheit von Luftsegmenten im Flüssigkeitsstrom, besteht, wobei die flüssigen, integralen Segmente aneinander angrenzen.

2. Analysegerät nach Anspruch 1,

weiterhin gekennzeichnet durch Mittel zum Beobachten der Eigenschaften der Proben im Detektor (12) und Erzeugen von Daten in Form von Digitalsignalen korrelierend zu den beobachteten Eigenschaften, Mittel, die auf das Beobachten bekannter Eigenschaftswerte einer injizierten Standardgruppe ansprechen, die durch den Detektor gezogen wird, um Parameterwerte zu erzeugen, die in digitaler Form zusammengefaßt sind, wobei die Auswertung der beobachteten Eigenschaften der getesteten, injizierten Proben durch den Detektor Mittel aufweist, um in einer Computerberechnung aus den von der bekannten Probe erhaltenen Daten eine nichtlineare Regression durchzuführen, und die algebraischen Modellparameter zu bestimmen, die das Strömungssystem charakterisieren, wobei die Gleichung gilt:

$$Y(t) = \frac{1}{2} P_3 C_0 \left[ 1 - \text{erf} \left\{ \frac{(1 - t/P_2)}{2\sqrt{P_1 \, t/P_2}} \right\} \right]$$

wobei $P_1$, $P_2$ und $P_3$ drei Parameter sind, $C_0$ die Charakteristik der Musterprobe und Y die detektierte Eigenschaft ist; eine Speichereinrichtung zum Speichern der Digitalsignale, wobei die Digitalsignale in digitaler Form Modellparameterwerte des Gerätes zusammenfassen; und Mittel zum wiederholten Durchführen der Computerberechnungen aus Daten, die von injizierten flüssigen Proben durch lineare Regression erhalten sind, um Werte einer Eigenschaft jeder Probe zu erhalten, die ist:

14

$$C_s = \frac{\sum\limits_{i=1}^{n} Y_i X_i}{\sum\limits_{i=1}^{n} X_i^2}$$

$$X_i = \tfrac{1}{2} P_3 \left\{ 1 - \text{erf} \left[ \frac{1 - t_i/P_2}{2\sqrt{P_1 \cdot t_i/P_2}} \right] \right\}$$

Mit $P_1$ gleich der Streuungszahl $P_2$ gleich der mittleren Verweilzeit, $P_3$ gleich der Proportionalitätskonstante bezogen auf die detektierte Eigenschaft der in Frage stehenden Probeneigenschaften $C_s$ und daß das System Mittel aufweist, die auf die besagten, erhaltenen Werte ansprechen, um schnell Daten und Aufzeichnungseigenschaftswerte der Proben zu erhalten.

3. Analysegerät nach Anspruch 1,
wobei der Detektor Mittel zum Detektieren von wenigstens einer Konzentration einer flüssigen Dispersion in einem Grenzflächenbereich einer Schrittimpulsformgebung der Flüssigkeit in einem integral segmentierten Strom aufweist; das Gerät weiterhin eine Recheneinrichtung (12) aufweist, mit Mitteln zum Aufzeichnen von Daten auf den detektierten Daten, und Mitteln zur nichtlinearen Regression der detektierten Daten eines besagten Grenzflächenbereichs, Mitteln zum Speichern der Daten nach der nichtlinearen Regression, und Mitteln zum Verarbeiten der detektierten Daten nach der nichtlinearen Regression eines anderen Grenzflächenbereichs einer Schrittimpulsformgebung.

4. Gerät nach Anspruch 3,
dadurch **gekennzeichnet,** daß die Modellparameter kalibrierbar sind, und in den Aufzeichnungsmitteln gespeichert sind, wobei das Gerät Mittel hat, um damit detektierte Daten nach der nichtlinearen Regression eines Grenzflächenbereiches einer Schrittimpulsinjektion zu vergleichen.

5. Verfahren zum Analysieren flüssiger Proben in einem Detektor bezüglich der Gehalte an flüssigen Zusammensetzungen;
durch Zuführen von flüssigen Proben, und Reaktionsmitteln oder Reagenzien, und Erzeugen einer Vakuumkraft zum Antreiben der flüssigen Proben, und Reaktionsmittel oder Reagenzien durch einen Detektor;
**gekennzeichnet** durch die Schritte:
Ziehen einer Probe in einem Flüssigkeitsstrom mittels einer Steuerventileinrichtung unter einer Vakuumkraft, Ziehen eines Reagens in einen Flüssigkeitsstrom mittels einer Steuerventileinrichtung unter einer Vakuumkraft, Steuern der Strömung des Flüssigkeitsstroms unter Vakuumkraft mittels einer Vakuum-Ventileinrichtung, die zwischen einer Vakuumquelle und der Steuerventileinrichtung positioniert ist;
Bilden eines nichtluftsegmentierten integralen Flüssigkeitsstromes mit nichtkontinuierlicher Strömung, im wesentlichen bestehend aus Proben, und Reaktionsmitteln oder Reagenzien, bei Anwesenheit von Luftsegmenten im Strom;
Injizieren einer Probe mit bekannten Eigenschaften in den nichtluftsegmentierten, integralen Flüssigkeitsstrom und Bilden eines Grenzflächenbereiches eines Schrittimpulses aus der flüssigen Probe in einem nicht-luftsegmentierten, integralen Stromes;
Beobachten der Eigenschaften der Konzentration der dispergierten Flüssigkeit der bekannten Proben am Grenzflächenbereich in einer Reihe von Beobachtungen und Schaffen von Daten in Form von Digitalsignalen korrelierend zu den beobachteten Eigenschaften;
Durchführen einer Computerberechnung basierend auf den Daten, die von den bekannten Proben erhalten sind, Erhalten von algebraischen Modellparametern, die das Strömungssystem charakerisieren, aus einer mathematischen Berechnung;

Speichern der digitalen Signale und der Modellparameterwertcharakteristik des Strömungssystems in digitaler Form;

wiederholtes Erhalten von Daten der Grenzflächenbereiche von Schrittimpulsen der flüssigen Proben, die wiederholt in den nichtluftsegmentierten, integralen Strom mit nichtkontinuierlicher Strömung injiziert werden; und

wiederholtes Durchführen der besagten Computerberechnungen mit den erhaltenen Daten, um Eigenschaftswerte jeder Probe zu erhalten.

**Revendications**

**1.** Appareil d'analyse pour détecter des propriétés et une composition d'échantillons liquides, l'appareil comprenant :

un moyen d'alimentation (15) comprenant une pluralité de sources (20) pour fournir des échantillons et des réactifs ;

un moyen de conduit (14) capable de recevoir des échantillons liquides et des réactants et des réactifs provenant dudit moyen d'alimentation (15) ;

un moyen de vide (46) connecté audit moyen de conduit (14) et capable de créer une force pour diriger lesdits échantillons liquides, réactants et réactifs à partir dudit moyen d'alimentation (15) à travers ledit moyen de conduit (14) et dans ledit moyen de vide (46) ;

un détecteur (12) pour détecter des propriétés ou la composition desdits échantillons liquides positionné dans ledit moyen de conduit (14) entre ledit moyen d'alimentation (15) et ledit moyen de vide (46) et capable de faire passer ledit courant liquide audit moyen de vide (46) ;

et une combinaison de vannes (28a, 28b, 28c, 28d, 36, 37, 39, 40, 41, 42) pour contrôler la force créée par le vide ;

caractérisé en ce que la combinaison des vannes sont disposées pour contrôler la force créée par le vide pour générer un courant liquide de segments entiers de liquide dans le moyen de conduit (14), le courant liquide consistant essentiellement des échantillons, réactant ou réactif en l'absence de segments d'air dans le courant liquide dans lequel lesdits segments entiers de liquide se font face l'un à l'autre.

**2.** Appareil d'analyse selon la revendication 1 comprenant de plus un moyen d'observation des propriétés des échantillons dans le détecteur (12) et fournissant des données sous forme de signaux digitaux corrélés auxdites propriétés observées, un moyen réagissant à l'observation de valeurs de propriétés connues d'un étalon injecté entraîné à travers le détecteur pour générer des valeurs de paramètres,résumées sous forme digitale, l'évaluation des propriétés observées des échantillons injectés testés à travers ledit détecteur incluant un moyen pour effectuer un calcul par ordinateur à partir des données obtenues à partir d'une régression non linéaire du spécimen connu pour déterminer les paramètres du modèle algébrique qui caractérisent le système d'écoulement, laquelle équation est

$$Y_{(t)} = 1/2 \, P_3 C_0 \left[ 1 - \mathrm{erf} \left\{ \frac{\left(1 - t/P_2\right)}{2\sqrt{P_1 \, t/P_2}} \right\} \right]$$

$P_1$ $P_2$ et $P_3$ étant trois paramètres, Co une caractéristique de l'échantillon spécimen et Y la propriété détectée, un moyen de stockage pour stocker les signaux digitaux, lesdits signaux digitaux résumant sous forme digitale les valeurs de paramètres du modèle de l'appareil, et un moyen pour effectuer répétitivement par ordinateur des calculs à partir des données obtenues à partir des échantillons liquides injectés par régression linéaire pour obtenir des valeurs d'une propriété de chaque échantillon qui est

$$C_s = \frac{\sum\limits_{i=1}^{n} Y_i \, x_i}{\sum\limits_{i=1}^{n} x^2}$$

$$X_i = \frac{1}{2} \, P_3 \left\{ 1 - erf \left[ \frac{1 - t_i / P_2}{2\sqrt{P_1 \, t_i / P_2}} \right] \right\}$$

où $P_1$ est le nombre de dispersion, $P_2$ est le temps de séjour moyen, $P_3$ est la constante de proportionnalité se rapportant à la propriété détectée de la propriété des espèces d'intérêt ($C_s$), et ledit système comprenant un moyen répondant auxdites valeurs obtenues pour obtenir rapidement des données et l'enregistreur des valeurs de propriétés des échantillons.

3. Appareil d'analyse selon la revendication 1, dans lequel ledit détecteur comprend un moyen pour détecter au moins une concentration d'une dispersion de liquide dans une zone interfaciale d'un mode par impulsion d'étape dudit liquide dans un courant segmenté entier ; l'appareil incluant de plus un moyen d'ordinateur (12), ayant des moyens pour enregistrer des données sur les données détectées, et un moyen pour effectuer une régression non linéaire des données détectées de ladite zone interfaciale, un moyen pour stocker les données après une régression non linéaire, et un moyen pour traiter les données détectées après une régression non linéaire d'une autre zone interfaciale d'un mode par impulsion d'étape.

4. Appareil selon la revendication 3, caractérisé en ce que des paramètres du modèle sont calibrables et stockés dans ledit moyen d'enregistrement, ledit appareil ayant un moyen pour comparer avec ceux-ci des données détectées après une régression non linéaire d'une zone interfaciale d'une injection par impulsion d'étape.

5. Procédé pour analyser des échantillons liquides dans un détecteur quant aux teneurs des compositions liquides :

en alimentant des échantillons liquides, et des réactants ou réactifs et en créant une force de vide pour diriger lesdits échantillons liquides, et réactifs ou réactants à travers un détecteur ;

caractérisé en ce qu'il comprend les étapes de :

entraînement d'un échantillon dans un courant liquide au moyen de vannes de contrôle sous une force de vide,

entraînement d'un réactif dans un courant liquide au moyen de vannes de contrôle sous une force de vide ;

contrôle de l'écoulement du courant liquide sous la force de vide par un moyen de vannes de vide situé entre une cource de vide et ledit moyen de vanne de contrôle ;

formation d'un courant segmenté sans air, liquide, intégral d'un écoulement non continu consistant essentiellement d'échantillons, et de réactants ou réactifs en l'absence de segments d'air dans le courant ;

injection d'un échantillon de propriétés connues dans ledit courant liquide intégral segmenté sans air et la formation d'une zone interfaciale d'une impulsion d'étape comprenant ledit échantillon liquide dans un courant intégral, segmenté sans air ;

observation des propriétés de la concentration du liquide dispersé de l'échantillon connu à la zone interfaciale en une série d'observations et fourniture de données sous forme de signaux digitaux corrélés auxdites propriétés observées ;

calcul par ordinateur sur les données obtenues à partir des échantillons connus, obtention à partir d'un modèle algébrique d'évaluation mathématique les paramètrès qui caractérisent le système d'écoulement ;

stockage des signaux digitaux et desdites valeurs de paramètres du modèle caractéristiques du système d'écoulement sous forme digitale ;

17

obtention répétitivement de données provenant des zones interfaciales des impulsions d'étape des échantillons liquides répétitivement injectés dans le courant intégral, segmenté sans air d'un écoulement non continu ; et

ledit calcul par ordinateur de façon répétitive, à partir des données obtenues, pour obtenir des valeurs d'une propriété de chaque échantillon.

FIG. I

BEGIN

INJECT STANDARD
AND RUN

TRANSLATE TRANSMITTANCE
TO ABSORBANCE

PERFORM NON-LINEAR
REGRESSION TO GET
$P_1$, $P_2$, $P_3$

INJECT SAMPLE
AND RUN

TRANSLATE TRANSMITTANCE
TO ABSORBANCE

PERFORM LINEAR
REGRESSION TO GET $C_S$

OUTPUT $C_S$ TO
DISPLAY

RESTANDARDIZE
(?)

Y            N

FIG. 2

FIG. 3

FIG. 4

FIG. 5A

EP 0 247 800 B1

FIG. 5B

23

FIG. 6

24

Figure 7

Figure 8

## Standardization
## Using Sample 1 (2 ppm)

Figure 9

Analysis
Usina Sample 1 (2 ppm)

Figure 10

Analysis
Using Sample 2 (2 ppm)

Figure 11

Figure 12

Analysis
Using Sample 4 (4 ppm)

Figure 13

Composite Absorbance Plot
Alum Method

Figure 14

$$C_{samp} = \frac{(P_3C)_{SD} - (P_3C)_D}{(P_3C)_{SD} - (P_3C)_{SD}} C_{std}$$

Alum Method - Nonlinear Regression
Using Dye Aliquot

Figure 15

Figure 16

34

Figure 17

Figure 18

Flatron Impulse - Nonlinear Regression
3 ppm Standard

Figure 19

Figure 20

Figure 21

39

Figure 22

Figure 23